(19) Europäisches Patentamt
European Patent Office
Office européen des brevets

(11) **EP 3 091 409 B1**

(12) **EUROPEAN PATENT SPECIFICATION**

(45) Date of publication and mention
of the grant of the patent:
**28.11.2018 Bulletin 2018/48**

(51) Int Cl.:
***G05B 19/19*** *(2006.01)*

(21) Application number: **16166818.1**

(22) Date of filing: **25.04.2016**

(54) **CONTROLLER, CONTROL SYSTEM, CONTROL METHOD FOR CONTROLLER, CONTROL PROGRAM, AND STORAGE MEDIUM**

STEUERUNG, STEUERUNGSSYSTEM, STEUERUNGSVERFAHREN FÜR DIE STEUERUNG, STEUERUNGSPROGRAMM UND SPEICHERMEDIUM

CONTRÔLEUR, SYSTÈME DE COMMANDE, PROCÉDÉ DE COMMANDE POUR CONTRÔLEUR, PROGRAMME DE COMMANDE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2015 JP 2015092353**

(43) Date of publication of application:
**09.11.2016 Bulletin 2016/45**

(73) Proprietor: **OMRON CORPORATION
Kyoto, Kyoto 600-8530 (JP)**

(72) Inventors:
• **SHIMAMURA, Junji
Kyoto, Kyoto 600-8530 (JP)**
• **IWAI, Yosuke
Kyoto, Kyoto 600-8530 (JP)**

(74) Representative: **Horn Kleimann Waitzhofer
Patentanwälte PartG mbB
Ganghoferstrasse 29a
80339 München (DE)**

(56) References cited:
**EP-A2- 1 431 852      JP-A- 2002 351 514**

**Description**

FIELD

The present invention relates to a controller that controls a slave axis in accordance with an operation of a master axis, a control system, a control method for a controller, a control program, and a storage medium.

BACKGROUND

Machine tools for cutting work or industrial machines such as industrial robots have been used at factories or other sites. Industrial machines may include a manual pulse generator, which is operated to move a blade for cutting work or to position a robot. Such an industrial machine typically includes a manual pulse generator with a knob, a pulse counter that counts the number of pulses output from the manual pulse generator, and a controller that calculates a control command value to be provided to a motor and outputs the command value. The pulse counter is integral with the controller that calculates a control command value to be provided to the motor.

CITATION LIST

PATENT LITERATURE

Patent Literature 1: Japanese Unexamined Patent Application Publication No. 2000-222022 (published on August 11, 2000)
Patent Literature 2: Japanese Unexamined Patent Application Publication No. 2002-351514 (published on December 6, 2002) discloses a method for limiting acceleration and derivative acceleration of a movable shaft for making it possible to keep the movable shaft within the response range.

EP 1 432 852 A2 discloses a synchronous controller capable of easily controlling a slave axis in synchronism with a master axis performing a composite motion along a plurality of coordinate axes.

SUMMARY

TECHNICAL PROBLEM

To allow industrial machine manufactures to easily design and manufacture intended industrial machines, the demand is increasing for controllers usable for any industrial machines.
The master axis of the manual pulse generator and the slave axis of the motor may have physical quantities expressed in different units. For example, the manual pulse generator may output 100 pulses per rotation (360 degrees), whereas the motor may use 17 bits to define each rotation (360 degrees). In this case, the manual pulse generator and the motor have different resolutions per rotation. The slave axis of a motor or other devices positons a component through a mechanism including a gear or a ball screw, which converts rotational motion to linear motion. Thus, the physical quantity of the slave axis and the movement quantity of the component positioned by the slave axis are controlled using control command values defined in different units. In this case, the movement quantity of the component for a single pulse output from the manual pulse generator is difficult to determine intuitively.
As a result, the designer at an industrial machine manufacturer may not be able to easily design a control algorithm for defining the relationship between a master axis and a component positioned by a slave axis.
In response to the above issue, one or more aspects of the present invention are directed to a controller, a control system, a control method for a controller, a control program, and a storage medium that allow easy designing of control algorithms.

SOLUTION TO PROBLEM

In response to the above issue, one aspect of the present invention provides a controller that is a programmable logic controller for rotationally controlling a slave axis based on a manual rotational operation of a master axis. The controller includes an obtaining unit, a positioning unit, an output unit, and a program module. The obtaining unit obtains operational quantity data indicating an operational quantity of the master axis in a predetermined period. The positioning unit converts the operational quantity of the master axis into a quantity in a unit used for a movement quantity of a component to be moved by the slave axis, and determines a position of the component corresponding to the operational quantity. The output unit outputs a control signal for controlling the slave axis to move the component to the position determined by the positioning unit. The program module receives an input parameter to be used in the unit conversion and the position determination unit, and causes the output unit to perform calculation in accordance with the parameter.

In the above structure, the positioning unit performs unit conversion into the unit used for the movement quantity of the component. In this case, the unit for the movement quantity of the component can be used in designing control algorithms for the controller. This allows easy designing of control algorithms.

In the controller according to the above aspect of the present invention, the positioning unit includes a first positioning unit. The first positioning unit includes a unit converter, a first calculation unit, a second calculation unit, and a third calculation unit. The unit converter converts the operational quantity indicated by the operational quantity data into the quantity in the unit used for the movement quantity of the component to determine a conversion quantity. The first calculation unit calculates a quantity of change in the conversion quantity in the predetermined period. The second calculation unit multiplies the change quantity by a predetermined magnification to calculate a magnification change quantity. The third calculation unit integrates the magnification change quantity to calculate a position of the component corresponding to the operational quantity.

The above structure allows easy designing of algorithms for magnification calculations.

In the controller according to the above aspect of the present invention, the second calculation unit changes the magnification in accordance with the change quantity.

The above structure drives the slave axis and moves the component in a stable manner without using, for example, a low-pass filter. For example, the magnification is set lower for a smaller change quantity, and is set higher for a larger change quantity. This reduces failures associated with the slave axis and the component, and allows the slave axis to move in synchronization with the master axis independently of the operational velocity of the master axis.

In the controller according to the above aspect of the present invention, when the magnification change quantity is greater than a maximum change quantity, the third calculation unit integrates the maximum change quantity to calculate the position of the component. When the magnification change quantity is not greater than the maximum change quantity, the third calculation unit integrates the magnification change quantity to calculate the position of the component.

The above structure prevents the slave axis from being driven excessively.

The controller according to the above aspect of the present invention further includes a setting unit that sets the maximum change quantity based on a previous magnification change quantity.

The above structure sets the maximum change quantity in accordance with previous operations of the master axis.

In the controller according to the above aspect of the present invention, the setting unit sets the maximum change quantity in correspondence with an operator who operates the master axis.

The above structure sets the maximum change quantity suitable for each operator.

In the controller according to the above aspect of the present invention, when the position calculated by the third calculation unit is outside a permissible movable range of the component, the first positioning unit determines a movable limit position to which the component is movable as a position of the component corresponding to the operational quantity.

The above structure prevents the component from moving out of its permissible movable range.

In the controller according to the above aspect of the present invention, the first positioning unit is a function block that receives at least the magnification or the maximum change quantity as an input parameter.

The above structure simply uses at least an input magnification or an input maximum change quantity to design a control algorithm for the controller.

In the controller according to the above aspect of the present invention, the positioning unit includes a second positioning unit. The second positioning unit includes a fourth calculation unit and a determination unit. The fourth calculation unit calculates a cumulative value for the operational quantity. The determination unit determines a position corresponding to the cumulative value as a position of the component corresponding to the operational quantity based on master-slave relationship information indicating a correspondence between the cumulative value and the position of the component.

The above structure allows easy designing of an algorithm defined by the master-slave relationship information.

In the controller according to the above aspect of the present invention, the master-slave relationship information includes a cam table or a cam calculation formula.

In the controller according to the above aspect of the present invention, the second positioning unit is a function block that receives the cam table or the cam calculation formula as an input parameter.

The above structure simply uses an input cam table or an input cam calculation formula to design a control algorithm for the controller.

In the controller according to the above aspect of the present invention, the obtaining unit obtains operational velocity data indicating an operational velocity of the master axis. The positioning unit includes a first positioning unit, and a second positioning unit that performs a position determination process different from a position determination process performed by the first positioning unit. When the operational velocity indicated by the operational velocity data is not greater than a predetermined value, the first positioning unit determines the position of the component corresponding to the operational quantity. When the operational velocity indicated by the operational velocity data is greater than the predetermined value, the second positioning unit determines the position of the component corresponding to the operational quantity.

The above structure can change the position determination process in accordance with an operation of the master axis.

Another aspect of the present invention provides a control system including the controller, a manual pulse generator, a counter unit, a slave axis, and a driver. The manual pulse generator includes a master axis, and outputs pulses in accordance with an operation of the operator. The counter unit counts the number of pulses output from the manual pulse generator, and outputs operational quantity data. The slave axis moves the component. The driver receives a control signal from the controller, and controls the slave axis based on the control signal. The slave axis is controlled in synchronization with the master axis.

The above structure allows the slave axis to move in synchronization with the master axis.

In the control system according to the above aspect of the present invention, the controller is connected to the counter unit with serial communication, a universal serial bus (USB), or wireless communication.

Another aspect of the present invention provides a control system including a manual pulse generator, a counter unit, a first controller, a second controller, a slave axis, and a driver. The manual pulse generator includes a master axis, and outputs pulses in accordance with an operation of the operator. The counter unit counts the number of pulses output from the manual pulse generator, and outputs operational quantity data. The first controller obtains the operational quantity data from the counter unit. The first controller is the controller according to any one of the above aspects. The second controller obtains the operational quantity data from the first controller and outputs the control signal. The second controller is the controller according to any one of the above aspects. The slave axis moves the component. The driver receives the control signal from the second controller, and controls the slave axis based on the control signal.

The above structure can arrange the controllers in a distributed manner in accordance with the structure of the industrial machine.

The control system according to the above aspect of the present invention further includes an input device including an input unit and a display unit. The positioning unit included in the controller is a function block. The input device displays an input screen for receiving an input parameter to be used in the function block in a graphical user interface format on the display unit.

The above structure allows easy input of the input parameter of the function block with an intuitive operation.

The control system according to the above aspect of the present invention further includes a display device including a display unit. The display device displays at least one piece of information selected from a signal status of the manual pulse generator, an input parameter and a calculation result of the controller on the display unit.

The above structure allows the operator of the master axis to determine at least one of the signal status of the manual pulse generator, or the input parameter or the calculation result of the controller during, for example, the operation of the master axis.

In response to the above issue, another aspect of the present invention provides a control method for a controller that is a programmable logic controller to control a slave axis based on an operation of a master axis. The method includes obtaining operational quantity data indicating an operational quantity of the master axis in a predetermined period, converting the operational quantity of the master axis into a quantity in a unit used for a movement quantity of a component to be moved by the slave axis, and determining a position of the component corresponding to the operational quantity, and outputting a control signal for controlling the slave axis to move the component to the position determined in the position determination.

The above structure produces the same advantageous effects as the controller.

The controller according to the above aspect of the present invention may be a computer. In this case, the computer functions as the components (software components) of the controller. Another aspect of the present invention may be a control program for the controller that is a computer. A still another aspect of the present invention may be a computer-readable storage medium storing the control program.

ADVANTAGEOUS EFFECTS

The embodiments of the present invention allow easy designing of control algorithms.

BRIEF DESCRIPTION OF THE DRAWINGS

Fig. 1 is a block diagram showing the main components of a controller according to one or more embodiments of the present invention.

Fig. 2 is a diagram showing the structure of a control system according to a first embodiment of the present invention.

Fig. 3 is a flowchart showing example processing performed by the control system.

Fig. 4 is a flowchart showing a first position determination process performed by a first positioning unit included in the controller.

Fig. 5 is a diagram showing an example of magnification information.

Fig. 6 is a graph showing variations in the change quantity over time.

Fig. 7 is a graph showing a magnification change quantity and a command change quantity.

Fig. 8 is a flowchart showing a second position determination process performed by a second positioning unit included in the controller.

Fig. 9 is a schematic diagram showing the structure of an industrial machine.

Fig. 10 is a graph showing a cam curve representing the relationship between the cumulative pulse number and the travel distance of a ball screw.

Fig. 11 is a diagram showing an example screen appearing on a touch panel included in the control system.

Fig. 12 is a diagram showing an example screen appearing on the touch panel included in the control system.

Fig. 13 is a diagram showing example connection for the controller in designing a control algorithm.

Fig. 14 is a diagram showing an example screen appearing on a terminal device connected to the controller.

Fig. 15 is a diagram showing an example screen appearing on the terminal device connected to the controller.

Fig. 16 is a diagram showing the structure of a control system according to a second embodiment of the present invention.

Fig. 17 is a diagram showing the structure of a control system according to a third embodiment of the present invention.

Fig. 18 is a diagram showing an example screen appearing on a touch panel included in the control system.

## DETAILED DESCRIPTION

### First Embodiment

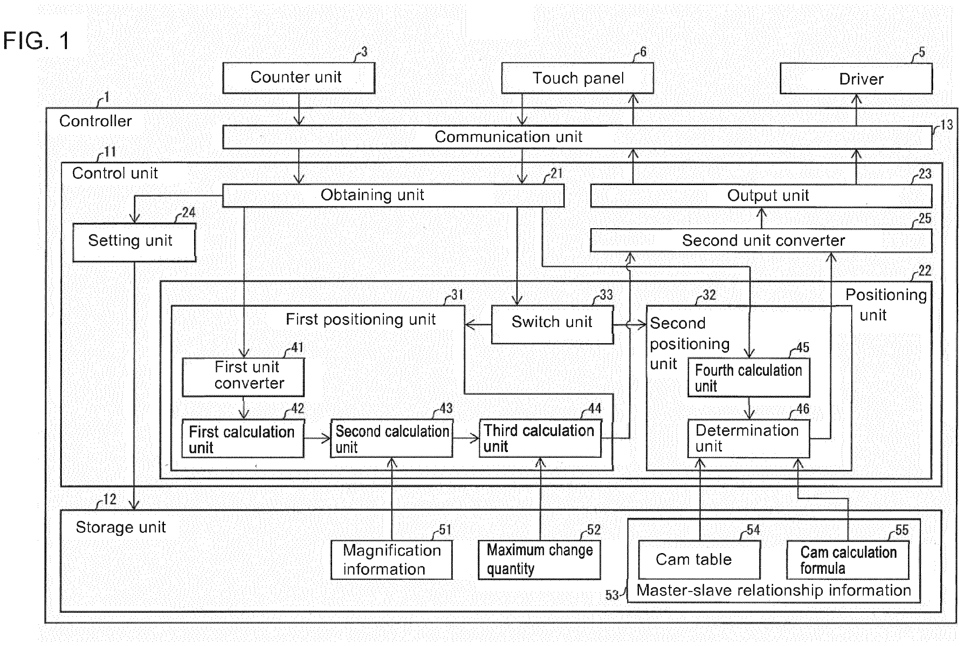

A first embodiment of the present invention will now be described with reference to Figs. 1 to 15.

### Control System

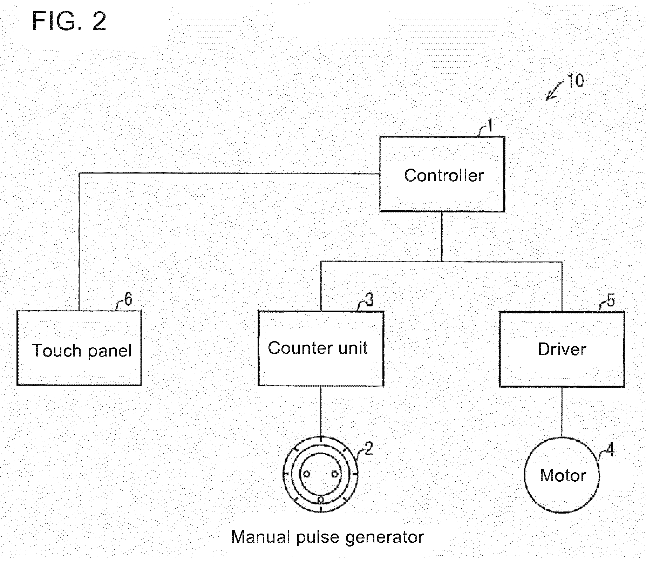

A control system 10 according to the present embodiment will now be described with reference to Fig. 2. Fig. 2 is a diagram showing the structure of the control system 10 according to the present embodiment. The control system 10 is incorporated in an industrial machine (not shown) to control the position of a component (not shown) of the industrial machine in accordance with an operation performed by an operator of the industrial machine. For example, the control system 10 adjusts the position of a blade for cutting work, or moves an industrial robot or sets the robot to a standby position during teaching of the robot.

As shown in Fig. 2, the control system 10 includes a controller 1, a manual pulse generator 2, a counter unit 3, a motor 4, and a driver 5. The controller 1 is connected to the counter unit 3 and the driver 5 in a communicable manner. The counter unit 3 is connected to the manual pulse generator 2 in a communicable manner. The driver 5 is connected to the motor 4 in a communicable manner. These devices are connected to one another in a communicable manner with any wired connection scheme or any wireless connection scheme. In the present embodiment, these devices (in particular, the controller 1, the counter unit 3, and the driver 5) are connected in a communicable manner with, for example, EtherCAT (registered trademark).

The manual pulse generator 2 includes a rotatable knob (master axis). The manual pulse generator 2 outputs one pulse for every predetermined angle of rotation of the knob performed by the operator. The manual pulse generator 2 may not include a rotatable knob, but may be any manual pulse generator that outputs a pulse signal in accordance with the quantity of operation of its master axis.

The counter unit 3 receives a pulse signal output from the manual pulse generator 2, and counts the number of pulses. The counter unit 3 transmits a master axis signal including operational quantity data indicating the number of pulses in a predetermined period to the controller 1 in response to a request from the controller 1. More specifically, the operational quantity data indicates the operational quantity of the master axis.

The counter unit 3 may further measure the frequency of a pulse signal output from the manual pulse generator 2. More specifically, the counter unit 3 may measure the operational velocity of the manual pulse generator 2. In this case, the counter unit 3 transmits a master axis signal including the operational quantity data and the operational velocity data indicating the operational velocity to the controller 1.

The controller 1 controls the motor 4, which is a slave axis, in accordance with an operation of the master axis.

More specifically, the controller 1 obtains a master axis signal from the counter unit 3. The controller 1 determines the position of a component of an industrial machine corresponding to the operational quantity of the master axis using a predefined control algorithm, and outputs a control signal for controlling the slave axis to move the component to the determined position to the driver 5. The controller 1 controls the slave axis in synchronization with the master axis. The controller 1 is, for example, a programmable logic controller (PLC). The controller 1 will be described in detail later.

The driver 5 receives a control signal from the controller 1, and controls the motor 4 based on the received control signal. More specifically, the driver 5 drives the motor 4 to rotate at a predetermined rotational velocity by a predetermined amount based on the control signal.

The motor 4 moves the component of the industrial machine.

As shown in Fig. 2, the control system 10 may further include a touch panel 6. The touch panel 6 is connected to the controller 1 in a communicable manner. The touch panel 6 is used by the operator to check the status of the control system 10 (industrial machine). The touch panel 6 is a display device including a display unit, and is also an input device including an input unit and a display unit.

Controller

The controller 1 will now be described with reference to Fig. 1. Fig. 1 is a block diagram showing the main components of the controller 1 in one or more embodiments. As shown in Fig. 1, the controller 1 includes a control unit 11, a storage unit 12, and a communication unit 13.

The communication unit 13 communicates with other devices such as the counter unit 3, the driver 5, and the touch panel 6 by wireless communication or wired communication, and transmits and receives data to and from these devices as controlled by the control unit 11.

The control unit 11 reads a program from the storage unit 12 onto a temporary storage unit (not shown), and executes the program to perform calculations. The control unit 11 also centrally controls the components of the controller 1. In the present embodiment, the control unit 11 includes an obtaining unit 21, a positioning unit 22, an output unit 23, a setting unit 24, and a second unit converter 25. In the present embodiment, the positioning unit 22 and the second unit converter 25 are function blocks (described in detail later).

The obtaining unit 21 obtains operational quantity data indicating the operational quantity of the master axis in a predetermined period from the counter unit 3 through the communication unit 13. The obtaining unit 21 outputs the obtained operational quantity data to the positioning unit 22. The obtaining unit 21 may also obtain operational velocity data indicating the operational velocity of the master axis in a predetermined period from the counter unit 3 through the communication unit 13. The obtaining unit 21 outputs the obtained operational velocity data to the positioning unit 22. The obtaining unit 21 may further obtain an input parameter of a function block (described in detail later) from an external input device, such as the touch panel 6, through the communication unit 13. The obtaining unit 21 outputs the obtained input parameter to the setting unit 24.

The positioning unit 22 obtains the operational quantity data from the obtaining unit 21, converts the operational quantity of the master axis indicated by the obtained operational quantity data into the quantity in the unit used for the movement quantity (travel distance) of a component to be moved by the slave axis, and determines the position of the component corresponding to the operational quantity. The positioning unit 22 transmits information about the determined position of the component to the second unit converter 25.

As shown in Fig. 1, the positioning unit 22 includes a first positioning unit 31, a second positioning unit 32, and a switch unit 33. The first positioning unit 31 and the second positioning unit 32 perform different position determination processes.

The first positioning unit 31 performs a first position determination process. The first positioning unit 31 includes a first unit converter (unit converter) 41, a first calculation unit 42, a second calculation unit 43, and a third calculation unit 44.

The first unit converter 41 obtains operational quantity data from the obtaining unit 21, converts the operational quantity indicated by the obtained operational quantity data into the quantity in the unit used for the movement quantity of a component to obtain the quantity resulting from the conversion (conversion quantity). The first unit converter 41 outputs the obtained conversion quantity to the first calculation unit 42.

The first calculation unit 42 receives the conversion quantity from the first unit converter 41, and calculates the quantity of change in the received conversion quantity in the predetermined period. The first calculation unit 42 outputs the calculated change quantity to the second calculation unit 43.

The second calculation unit 43 receives the change quantity from the first calculation unit 42, and reads magnification information 51 from the storage unit 12. The second calculation unit 43 multiplies the received change quantity by a predetermined magnification indicated by the read magnification information 51 to calculate the quantity of change in the magnification. The second calculation unit 43 outputs the calculated magnification change quantity to the third calculation unit 44. The second calculation unit 43 may change the magnification in accordance with the change quantity received from the first calculation unit 42. In this case, the magnification information 51 includes a plurality of magnifications to be selected in correspondence with the change quantity.

The third calculation unit 44 receives the magnification change quantity from the second calculation unit 43, and integrates the received magnification change quantity to calculate the position of the component corresponding to the operational quantity. The third calculation unit 44 transmits information about the calculated position of the component to the second unit converter 25. The third calculation unit reads a maximum change quantity 52 from the storage unit 12. When the received magnification change quantity is greater than the maximum change quantity 52, the third calculation unit integrates the maximum change quantity 52 to calculate the position of the component. When the obtained magnification change quantity is not greater than the maximum change quantity 52, the third calculation unit integrates the magnification change quantity to calculate the position of the component.

When the position of the component calculated by the third calculation unit 44 is outside a permissible movable range of the component, the first positioning unit 31 may determine a movable limit position to which the component is movable as the position of the component corresponding to the operational quantity, and may transmit information about the determined position to the second unit converter 25.

The first positioning unit 31 may be a function block that receives at least the magnification information 51 or the maximum change quantity 52 as an input parameter.

The second positioning unit 32 performs a second position determination process. The second positioning unit 32 includes a fourth calculation unit 45 and a determination unit 46.

The fourth calculation unit 45 obtains operational quantity data from the obtaining unit 21, and cumulates the operational quantity indicated by the obtained operational quantity data to calculate a cumulative value for the operational quantity from the home position of the master axis. The fourth calculation unit 45 outputs the calculated cumulative value to the determination unit 46.

The determination unit 46 receives the cumulative value from the fourth calculation unit 45. The determination unit 46 reads, from the storage unit 12, master-slave relationship information 53 indicating the relationship between the cumulative value for the operational quantity from the home position of the master axis and the position of the component. The determination unit 46 determines the position corresponding to the obtained cumulative value based on the read master-slave relationship information 53 as the position of the component corresponding to the operational quantity in a predetermined period. The master-slave relationship information 53 includes a cam table 54 or a cam calculation formula 55.

The second positioning unit 32 may be a function block that receives the cam table 54 or the cam calculation formula 55 as an input parameter.

The switch unit 33 obtains operational velocity data from the obtaining unit 21, and determines whether the operational velocity indicated by the obtained operational velocity data is not greater than a predetermined value. When the operational velocity indicated by the operational velocity data is not greater than the predetermined value, the switch unit 33 activates the first positioning unit 31 to perform the first position determination process. When the operational velocity indicated by the operational velocity data is greater than the predetermined value, the switch unit 33 activates the second positioning unit to perform the second position determination process.

The second unit converter 25 converts the position of the component (movement quantity) determined by the positioning unit 22 into the quantity in the unit used for the slave axis (the rotational quantity of the motor 4). The second unit converter 25 outputs the resultant rotational quantity to the output unit 23.

The output unit 23 generates a control signal for controlling the slave axis to move the component to the position determined by the positioning unit 22, and outputs the generated control signal to the driver 5 through the communication unit 13. More specifically, the output unit 23 generates the control signal based on the rotational quantity received from the second unit converter 25.

The setting unit 24 obtains the input parameter from the obtaining unit 21, and stores the obtained input parameter into the storage unit 12. The setting unit 24 may also set the maximum change quantity 52 based on previous magnification change quantities calculated by the second calculation unit 43. More specifically, the setting unit 24 sets the average, the median, the upper limit value, or another value of previous magnification change quantities as the maximum change quantity 52. The setting unit 24 may set the maximum change quantity 52 for each operator who operates the master axis. More specifically, the operator may operate the touch panel 6 and input his or her unique ID before operating the master axis. The second calculation unit 43 stores the calculated magnification change quantity in correspondence with each operator ID in the storage unit 12. The setting unit 24 sets the maximum change quantity 52 for each ID based on previous magnification change quantities for each ID stored in the storage unit 12.

The storage unit 12 stores programs and data referenced by the control unit 11. For example, the storage unit 12 stores the magnification information 51, the maximum change quantity 52, the cam table 54, and the cam calculation formula 55. The storage unit 12 may further store calculation results obtained by the positioning unit 22 and the second unit converter 25.

Processing by Control System

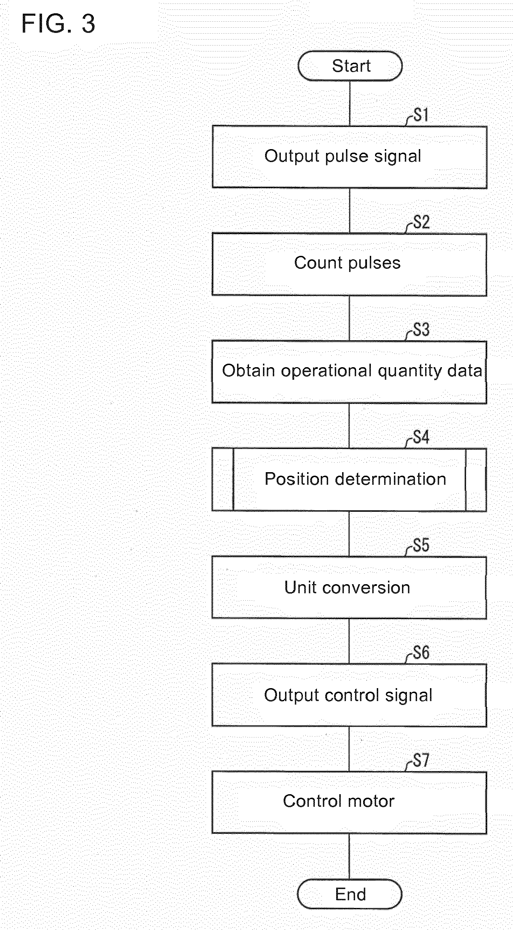

The processing performed by the control system 10 according to the embodiment of the present invention will now be described with reference to Fig. 3. Fig. 3 is a flowchart showing example processing performed by the control system 10 according to the embodiment.

As shown in Fig. 3, when an operator rotates the knob, the manual pulse generator 2 outputs a pulse signal in accordance with an operational quantity (S1). The counter unit 3 counts the number of pulses output from the manual pulse generator 2 (S2).

The obtaining unit 21 included in the controller 1 obtains the operational quantity data from the counter unit 3 in every predetermined period (S3: obtaining data). The positioning unit 22 performs the position determination process, and determines the position of the component based on the operational quantity data (S4: position determination process).

The second unit converter 25 included in the controller 1 converts the position of the component (movement quantity) determined by the positioning unit 22 into the quantity in the unit used for the rotational quantity of the motor 4 (S5). For example, the second unit converter 25 performs unit conversion using Formula 1 below. In Formula 1, Ps is the number of pulses (rotational quantity) for rotating the motor to move the component to the position determined by the positioning unit 22, and D is the distance by which the component is to travel from the current position to the position determined by the positioning unit 22.

Formula 1

$$Ps = \frac{\text{Pulse number per motor rotation}}{\text{Travel distance of component per motor rotation}} \times D \qquad (1)$$

The second unit converter 25 rounds down the value of Ps calculated using Formula 1 to the nearest integer, and determines the number of pulses. The second unit converter 25 stores the decimal value eliminated by rounding, and adds the decimal value to the newly calculated value of Ps to reduce calculation errors.

The output unit 23 generates a control signal based on the rotational quantity determined by the second unit converter 25. For example, the output unit 23 may generate, as a control signal, a pulse signal with the number of pulses equal to the pulse number determined by the second unit converter 25. The output unit 23 outputs the generated control signal to the driver 5 through the communication unit 13 (S6: output). The driver 5 controls the motor 4 based on the control signal (S7). The motor 4 rotates to move the component to the position determined in accordance with the operation.

First Position Determination Process

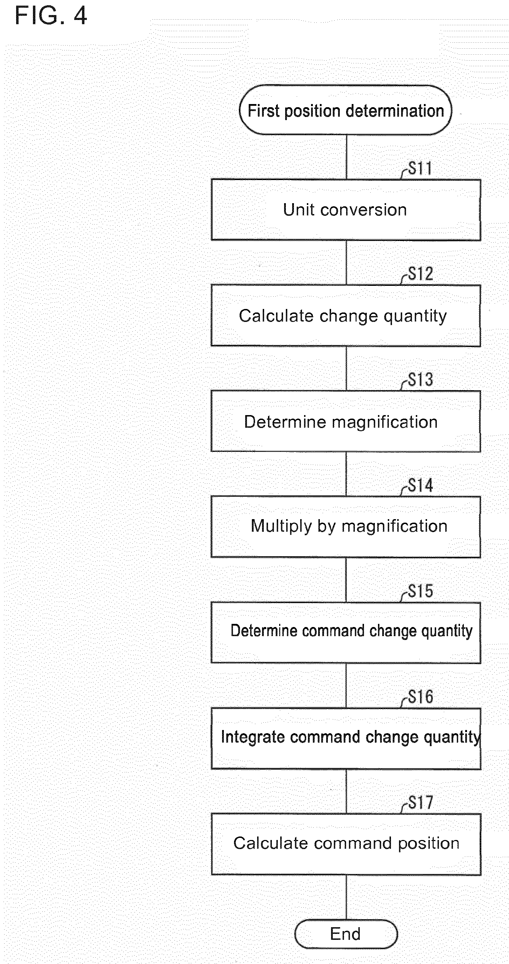

One position determination process performed in S4 in Fig. 3 will now be described with reference to Fig. 4. Fig. 4 is a flowchart showing the first position determination process performed by the first positioning unit 31.

As shown in Fig. 4, the first unit converter 41 converts the operational quantity of the component indicated by the operational quantity data into the quantity in the unit used for the movement quantity to obtain the conversion quantity (S11). For example, the first unit converter 41 performs unit conversion using Formula 2 below. In Formula 2, Pm is the number of pulses indicated by the operational quantity data, and d is the quantity resulting from the conversion.

Formula 2

$$d = \frac{\text{Travel distance of component per rotation of manual pulse}}{\text{Pulse number per rotation of manual pulse generator}} \times Pm \qquad (2)$$

The first calculation unit 42 calculates the quantity of change in the conversion quantity obtained by the first unit converter 41 in a predetermined period (S12).

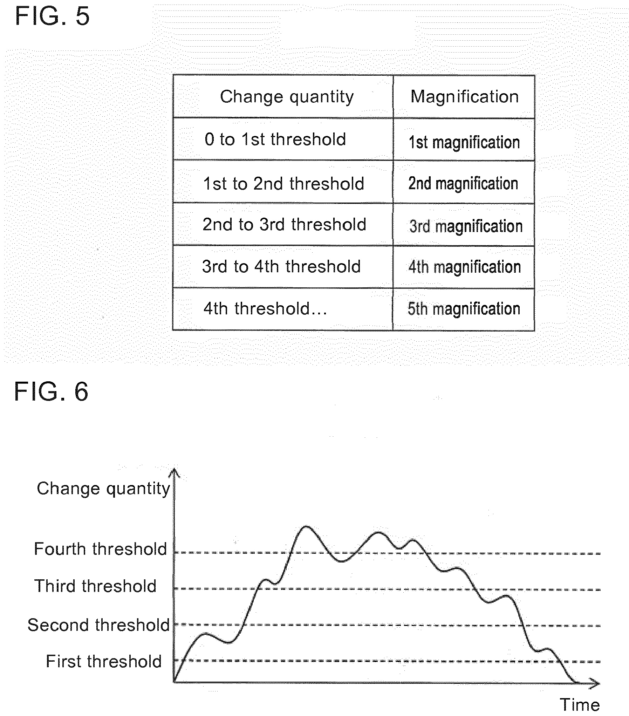

The second calculation unit 43 reads the magnification information 51 from the storage unit 12. For example, the magnification information 51 is a table shown in Fig. 5. The second calculation unit 43 determines the magnification corresponding to the change quantity calculated by the first calculation unit 42 by referencing the magnification information 51 (S13). The second calculation unit 43 multiplies the change quantity calculated by the first calculation unit 42 by the determined magnification to calculate a magnification change quantity (S14).

The third calculation unit 44 reads the maximum change quantity 52 from the storage unit 12, and determines whether the magnification change quantity calculated by the second calculation unit is not greater than the maximum change quantity 52. When the magnification change quantity is not greater than the maximum change quantity 52, the third calculation unit 44 determines the magnification change quantity calculated by the second calculation unit to be a command change quantity. When the magnification change quantity is greater than the maximum change quantity 52, the third calculation unit 44 determines the maximum change quantity 52 to be the command change quantity (S15). The third calculation unit 44 integrates the determined command change quantity, and calculates the movement quantity of the component corresponding to the operational quantity (S16). The third calculation unit 44 calculates, as the command position, the position to which the component is to move from the current position by the calculated movement quantity (S17). The third calculation unit 44 transmits information about the calculated command position to the second unit converter 25.

The operational velocity (rotational velocity) of the manual pulse generator 2 operated by the operator typically varies. As a result, the change quantity corresponding to the operational velocity varies accordingly as shown in Fig. 6. The rotational velocity input by the user thus typically varies. When a control signal to be provided to the motor is generated in accordance with such variations in the rotational velocity, the rotational velocity of the motor varies accordingly. Such variations can cause an unusual sound produced by the motor or cause vibrations in the component moved by the motor. To reduce these phenomena, signal smoothing is performed by using, for example, a low-pass filter. However, such signal smoothing can disable the manual pulse generator 2 from operating in cooperation with the movement of the motor. In the embodiment of the present invention, the magnification to be multiplied is variable in accordance with the change quantity in S13. For a smaller change quantity (or operational velocity), the magnification to be multiplied is set lower. For a larger change quantity, the magnification to be multiplied is set higher. When the user intends to move the slave axis by a greater degree, the change quantity (or input velocity) is set larger. When the user intends to move the slave axis slightly, the change quantity (input velocity) is set smaller. In this manner, the magnification to be multiplied is variable in accordance with the change quantity. This achieves operations intended by the user. This reduces the above phenomena, and enables the slave axis to move in synchronization with the master axis when the operational velocity is either high or low.

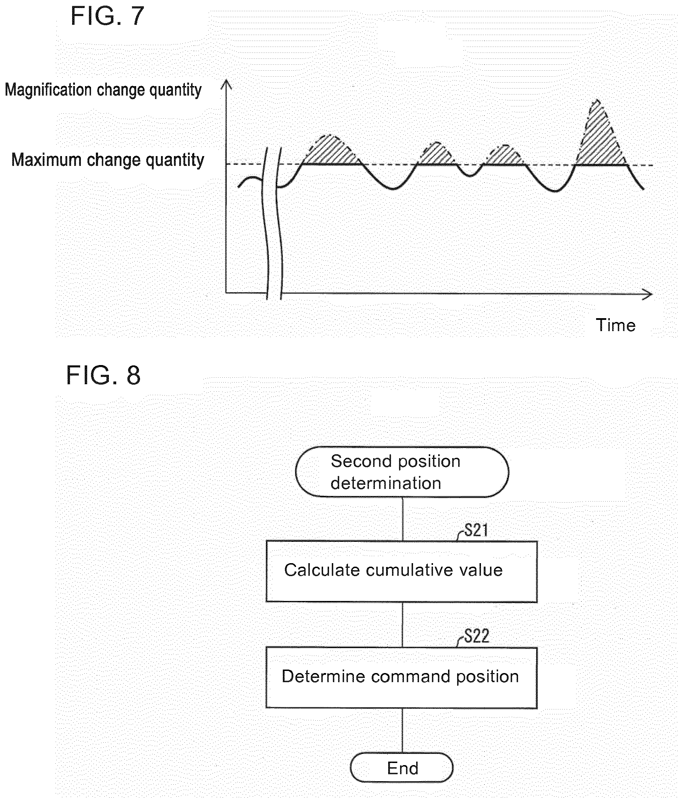

The magnification change quantity calculated by the second calculation unit may increase excessively. When, for example, the magnification change quantity calculated by the second calculation unit (indicated by a dashed dotted line in the figure) varies as shown in Fig. 7, the third calculation unit 44 sets the value of the command change indicated by a thick line in Fig. 7 in S15 as described above in the embodiment of the present invention. This prevents the motor 4 from being driven excessively.

Second Position Determination Process

Another position determination process performed in S4 of Fig. 3 will now be described with reference to Fig. 8. Fig. 8 is a flowchart showing the second position determination process performed by the second positioning unit 32.

As shown in Fig. 8, the fourth calculation unit 45 cumulates the operational quantity indicated by the operational quantity data to calculate the cumulative value for the operational quantity from the home position of the master axis (S21).

The determination unit 46 reads master-slave relationship information 53 from the storage unit 12. The determination unit 46 determines the position corresponding to the cumulative value obtained by the fourth calculation unit 45 based on the read master-slave relationship information 53 as the position of the component (command position) corresponding to an operational quantity in a predetermined period (S22). The determination unit 46 transmits information about the determined command position to the second unit converter 25.

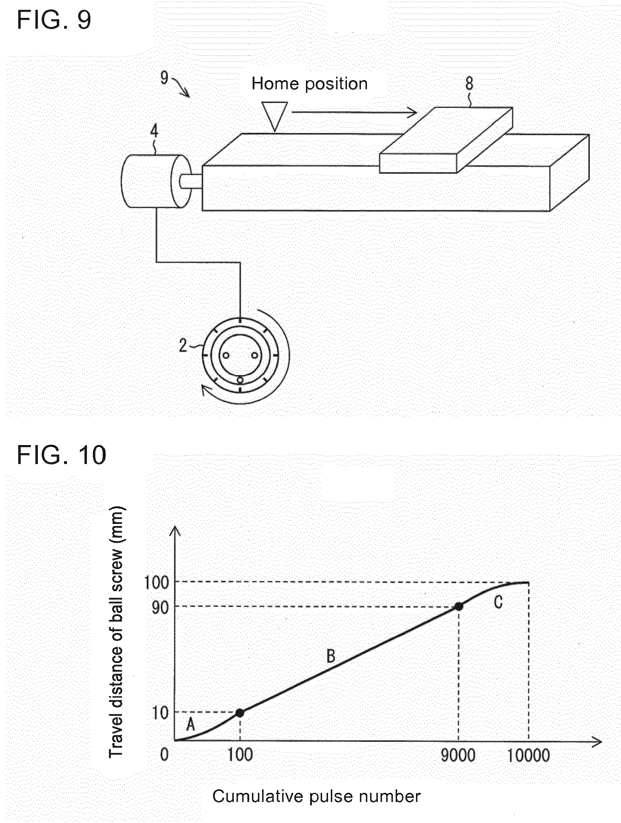

An industrial machine 9 shown in Fig. 9 will now be described as an example. Fig. 9 is a schematic diagram showing the structure of the industrial machine 9. To simplify the drawing, Fig. 9 does not show components such as the controller 1.

When an operator of the industrial machine 9 shown in Fig. 9 rotates a manual pulse generator 2 clockwise from its initial position, a ball screw 8, which is a component of the industrial machine 9, moves from the home position to the right. In this case, a fourth calculation unit 45 calculates a cumulative value for the operational quantity of the manual pulse generator 2 in the forward direction (clockwise) from the initial position. More specifically, the fourth calculation unit 45 counts the number of pulses output in accordance with the clockwise operation, subtracts the number of pulses output in accordance with a counterclockwise operation to calculate the cumulative value.

The correspondence between the cumulative value for pulses from the initial position of the manual pulse generator 2 shown in Fig. 9 and the travel distance of the ball screw 8 from the home position in the forward direction (to the right) may be represented by, for example, a cam curve shown in Fig. 10. The cam curve shown in Fig. 10 is expressed by a cubic function or a cycloid curve within a range of cumulative values of 0 to 100 (range A), a linear function in a range of cumulative values of 100 to 9000 (range B), and a cubic function or a cycloid curve in a range of cumulative values of 9000 to 10000 (range C).

The correspondence between the cumulative value and the travel distance may be discretely extracted from the cam curve shown in Fig. 10 to generate a cam table. The functions expressing the curves in the ranges A to C may be calculated and combined to generate a cam calculation formula.

The cam curve may not be used to represent the correspondence shown in Fig. 9, but may instead represent the correspondence between the position of the master axis (the rotational angle of the knob of the manual pulse generator 2 from the initial position) and the travel distance of the component.

Display Screens of Touch Panel

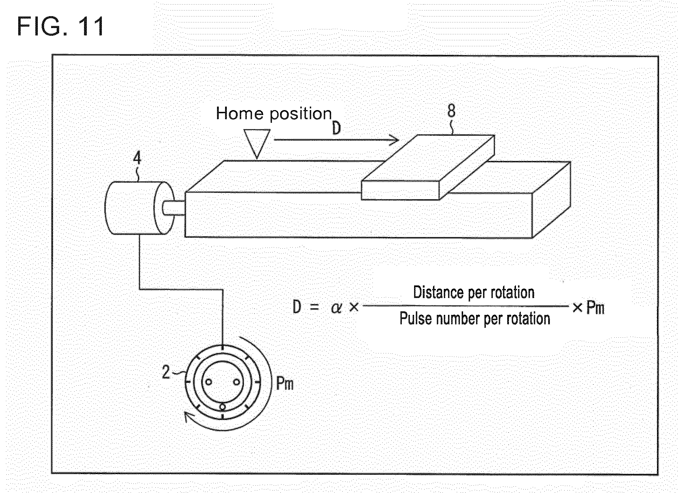

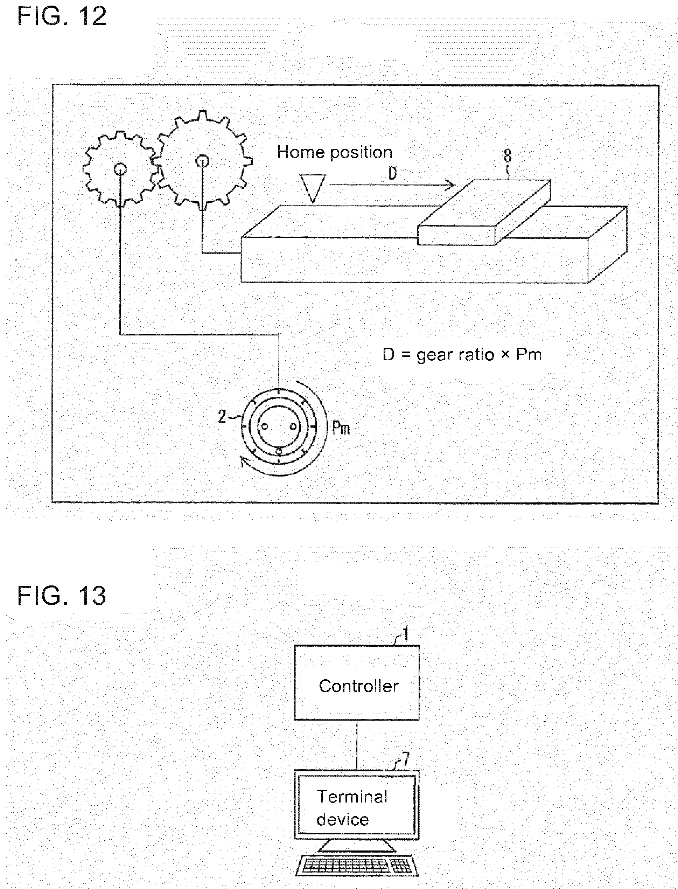

Example display screens appearing on the touch panel 6 will now be described with reference to Figs. 11 and 12. Figs. 11 and 12 are diagrams showing example screens appearing on the touch panel 6.

As shown in Figs. 11 and 12, the display unit included in the touch panel 6 shows an industrial machine schematically, together with a calculation formula representing the relationship between the operational quantity of its master axis and the travel distance of a component. An operator may operate the touch panel 6 to change a coefficient or other terms of the calculation formula.

In addition to the schema of the industrial machine and the calculation formula, the touch panel 6 may also display the signal status of a pulse signal output from the manual pulse generator 2 and input parameters and calculation results of the controller 1. The signal status of a pulse signal displayed on the touch panel 6 may be information indicating whether the manual pulse generator 2 is outputting a pulse signal in accordance with an operation, the number of pulses (operational quantity), or the frequency of pulses (operational velocity). The input parameters of the controller 1 include input parameters to be used in function blocks that will be described later. The calculation results of the controller 1 include calculation results obtained by the first positioning unit, such as the conversion quantity, the change quantity, the magnification change quantity, the command change quantity, and the movement quantity of the component and the position of the component, and calculation results obtained by the second positioning unit, such as the cumulative value and the position of the component.

Function Block

As shown in Fig. 13, the controller 1 is connected to a terminal device 7, such as a personal computer (PC). The terminal device 7 is used to perform various settings of the controller 1. The terminal device 7 includes an input unit, which receives various settings input from a designer, and a display unit, which displays an input screen.

In the present embodiment, the controller 1 (in particular, the positioning unit 22) achieves its functions using function blocks. In the present embodiment, the terminal device 7 displays an input screen for receiving an input parameter to be used in each function block in a graphical user interface (GUI) format on the display unit.

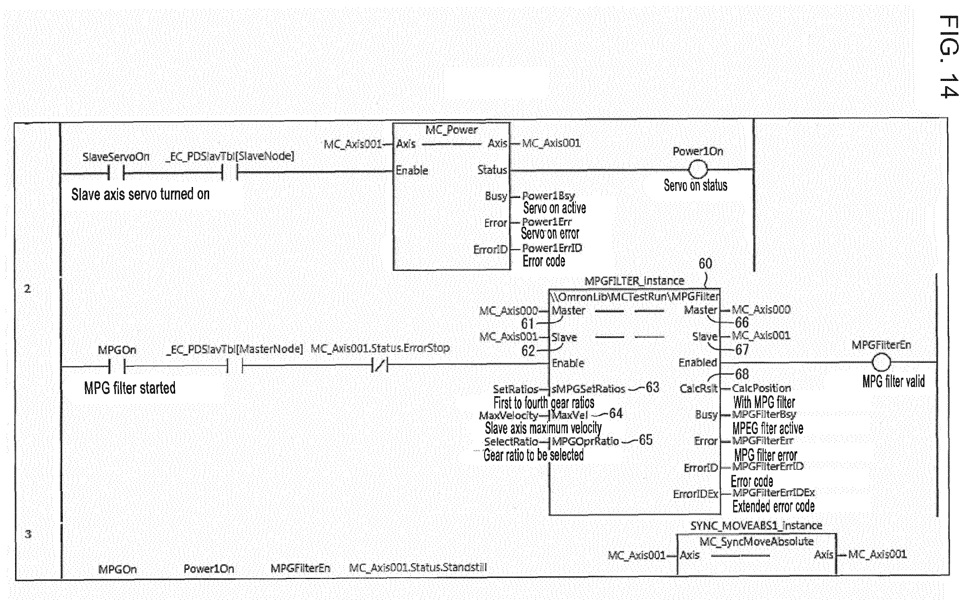

The input screen appearing on the display unit included in the terminal device 7 will now be described with reference to Fig. 14. Fig. 14 shows an example input screen for each function block described using a ladder diagram.

As shown in Fig. 14, a function block (MPGFILTER_instance) 60 includes input-output variables, input variables, and output variables. More specifically, the input-output variables include Master 61, Slave 62, Master 66, and Slave 67. The variables Master 61 and Master 66 are used to designate the master axis (manual pulse generator 2) and are input into the controller 1. The variables Slave 62 and Slave 67 are used to designate the slave axis (the motor 4) that is controlled by the controller 1. The input variables include sMPGSetRatios 63, MaxVel 64, and MPGOprRatio 65. The variable sMPGSetRatios 63 is the magnification information 51. The variable MaxVel 64 is the maximum change quantity 52. The variable MPGOprRatio 65 is used to select the magnification used in the position determination process. The output variables include CalcRslt 68. The variable CalcRslt 68 indicates the position of the component calculated by the function block.

The designer can select the variables shown in Fig. 14 to input the input parameters. In addition to the input parameters shown in Fig. 14, the designer may input information about the position determination process (either the first position determination process or the second position determination process), a threshold for the velocity of the switching operation, or master-slave relationship information 53 (the cam table 54 and the cam calculation formula 55) as an input parameter for the function block.

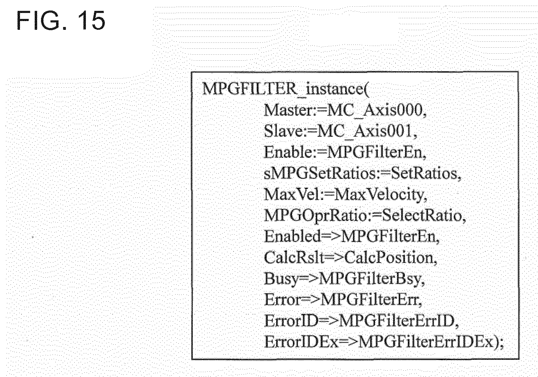

As shown in Fig. 15, the function block may be described in a structured text.

Although the various settings of the controller 1 are often performed in advance, the settings may be performed during the operation of the industrial machine. The control system 10 may include the terminal device 7. The touch panel 6 may display an input screen for inputting input parameters to be used in function blocks in the GUI format, and the touch panel 6 may be operated to input the input parameters.

Second Embodiment

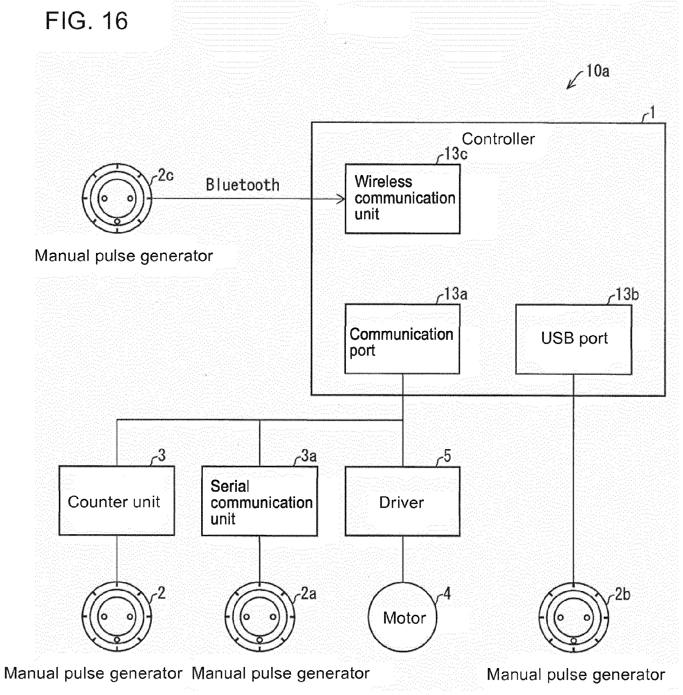

A second embodiment of the present invention will now be described with reference to Fig. 16. Fig. 16 is a diagram showing the structure of a control system 10a according to the second embodiment. For ease of explanation, the components with the same functions as the components described in the first embodiment are given the same reference numerals as those components, and will not be described.

As shown in Fig. 16, the control system 10a includes four manual pulse generators 2 to 2c. The controller 1 obtains master axis signals from the four manual pulse generators 2 to 2c with different communication schemes.

More specifically, the controller 1 includes, as the communication unit 13, a communication port 13a, a universal serial bus (USB) port 13b, and a wireless communication unit 13c. The communication port 13a obtains a master axis signal from the manual pulse generator 2a with serial communication through the serial communication unit 3a. The controller 1 and the manual pulse generator 2b are connected to each other with a USB. The USB port 13b obtains a master axis signal from the manual pulse generator 2b. The controller 1 and the manual pulse generator 2c are wirelessly connected to each other with Bluetooth (registered trademark). The wireless communication unit 13c obtains a master axis signal from the manual pulse generator 2c.

Although not shown in Fig. 16, each of the manual pulse generators 2a to 2c includes a counter unit 3.

In this manner, the controller 1 obtains a master axis signal from the manual pulse generator 2 (counter unit 3) by wired communication or wireless communication. In other words, the controller 1 included in the control system 10a obtains a master axis signal from the manual pulse generators 2 to 2c, each of which includes a predetermined interface according to the present embodiment.

Third Embodiment

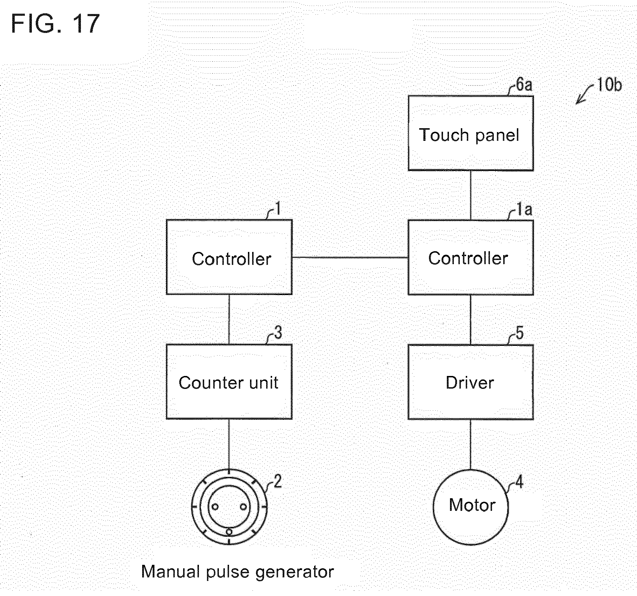

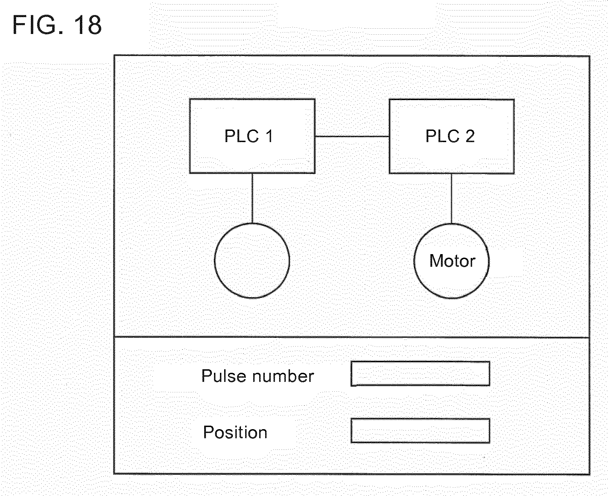

A third embodiment of the present invention will now be described with reference to Figs. 17 and 18. Fig. 17 is a diagram showing the structure of a control system 10b according to the third embodiment. For ease of explanation, the components having the same functions as the components described in the first embodiment are given the same reference numerals as those components, and will not be described.

As shown in Fig. 17, the control system 10b includes two controllers, which are a controller 1 (first controller) and a controller 1a (second controller), a manual pulse generator 2, a counter unit 3, a motor 4, a driver 5, and a touch panel 6a. The controller 1 is connected to the counter unit 3 and the controller 1a in a communicable manner. The controller 1a is connected to the controller 1, the driver 5, and the touch panel 6a in a communicable manner. The counter unit 3 is connected to the manual pulse generator 2 in a communicable manner. The driver 5 is connected to the motor 4 in a communicable manner. These devices are connected to one another in a communicable manner with a wired connection scheme or a wireless connection scheme. In the present embodiment, the communicable connection between the controller 1 and the counter unit and the communicable connection between the controller 1a and the driver 5 both use EtherCAT (registered trademark). The communicable connection between the controller 1 and the controller 1a uses Ethernet (registered trademark).

When the manual pulse generator 2 and the motor 4 (component to be moved) are distant from each other in, for example, a large industrial machine, the controllers 1 and 1a may be arranged in a distributed manner as shown in Fig. 17. In this case, the controller 1 obtains a master axis signal from the counter unit, and outputs the obtained master axis signal to the controller 1a. The controller 1a then generates a control signal in response to the master axis signal provided from the controller 1, and outputs the control signal to the driver 5.

A screen appearing on the touch panel 6a, which is connected to the controller 1a, will now be described with reference to Fig. 18. Fig. 18 is a diagram showing an example screen appearing on the touch panel 6a.

As shown in Fig. 18, the touch panel 6a may schematically display the distributed control system 10b, together with the number of pulses output from the manual pulse generator 2, and the position of the component moved by the motor 4. This may allow the operator distant from the manual pulse generator 2 or from the motor 4 (component) to check the status of the control system 10b.

The touch panel 6 may be connected to the controller 1. The touch panel 6 may then display, for example, the screen shown in Fig. 18.

Implementation Using Software

The control blocks (in particular, the control unit 11) included in the controller 1 may be implemented by using a logic circuit (hardware), such as an integrated circuit (IC chip), or by using software implemented by a central processing unit (CPU).

When the control blocks are implemented by using software, the controller 1 includes a CPU, which executes instructions included in a program or software to achieve its functions, a read-only memory (ROM) or a storage device (hereinafter referred to as a storage medium), which stores the program and various data readable by a computer (or by the CPU), and a random access memory (RAM), into which the program is expanded. The computer (or CPU) reads the program from the storage medium, and implements the program to achieve one or more aspects of the present invention. The storage medium may be a non-transitory tangible medium, such as a tape, a disk, a card, a semiconductor memory, or a programmable logic circuit. The program may be provided via any transmission medium that can transmit the program to the computer (such as a communication network or a broadcast wave). One or more embodiments of the present invention may be implemented using programs that are electronically transmitted in the form of data signals carried by carrier waves.

INDUSTRIAL APPLICABILITY

One or more embodiments of the present invention are applicable to a controller that controls a slave axis in accordance with an operation of a master axis.

REFERENCE SIGNS LIST

1 controller
2 manual pulse generator (master axis)
3 counter unit
4 motor (slave axis)
5 driver
6 touch panel (input device, display device)
7 terminal device (input device)
8 ball screw (component)
9 industrial machine
10 control system
21 obtaining unit
22 positioning unit
23 output unit
31 first positioning unit
32 second positioning unit
41 first unit converter (unit converter)
42 first calculation unit
43 second calculation unit
44 third calculation unit
45 fourth calculation unit
46 determination unit

**Claims**

1. A controller (1) that is a programmable logic controller for rotationally controlling a slave axis based on a manual rotational operation of a master axis, the controller (1) comprising:

   an obtaining unit (21) configured to obtain operational quantity data indicating an operational quantity of the master axis in a predetermined period;
   a positioning unit (22) configured to convert the operational quantity of the master axis into a quantity in a unit used for a movement quantity of a component to be moved by the slave axis, and determine a position of the component corresponding to the operational quantity;
   an output unit (23) configured to output a control signal for rotationally controlling the slave axis to move the component to the position determined by the positioning unit (22); and
   a program module configured to receive an input parameter to be used in the unit conversion and the positioning unit (22), and cause the controller (1) to perform calculation in accordance with the at least one parameter.

2. The controller (1) according to claim 1, wherein
   the positioning unit (22) includes a first positioning unit (31), and
   the first positioning unit (31) includes

   a unit converter (41) configured to convert the operational quantity indicated by the operational quantity data into the quantity in the unit used for the movement quantity of the component to determine a conversion quantity,

a first calculation unit (42) configured to calculate a quantity of change in the conversion quantity in the predetermined period,

a second calculation unit (43) configured to multiply the change quantity by a predetermined magnification to calculate a magnification change quantity, and

a third calculation unit (44) configured to integrate the magnification change quantity to calculate a position of the component corresponding to the operational quantity.

3. The controller (1) according to claim 2, wherein
the second calculation unit (43) is configured to change the magnification in accordance with the change quantity.

4. The controller (1) according to any one of claims 2 and 3, wherein
when the magnification change quantity is greater than a maximum change quantity, the third calculation unit (44) integrates the maximum change quantity to calculate the position of the component, and
when the magnification change quantity is not greater than the maximum change quantity, the third calculation unit (44) integrates the magnification change quantity to calculate the position of the component.

5. The controller (1) according to claim 4, further comprising:
a setting unit (24) configured to set the maximum change quantity based on a previous magnification change quantity.

6. The controller (1) according to claim 5, wherein
the setting unit (24) sets the maximum change quantity in correspondence with an operator who operates the master axis.

7. The controller (1) according to any one of claims 2 to 6, wherein
when the position calculated by the third calculation unit (44) is outside a permissible movable range of the component, the first positioning unit (31) determines a movable limit position to which the component is movable as a position of the component corresponding to the operational quantity.

8. The controller (1) according to claim 4, wherein
the first positioning unit (31) is a function block configured to receive at least the magnification or the maximum change quantity as an input parameter.

9. The controller (1) according to any one of claims 1 to 8, wherein
the positioning unit (22) includes a second positioning unit (32), and
the second positioning unit (32) includes a fourth calculation unit (45) configured to calculate a cumulative value for the operational quantity, and
a determination unit (46) configured to determine a position corresponding to the cumulative value as a position of the component corresponding to the operational quantity based on master-slave relationship information indicating a correspondence between the cumulative value and the position of the component.

10. The controller (1) according to claim 9, wherein
the master-slave relationship information comprises a cam table or a cam calculation formula.

11. The controller (1) according to claim 10, wherein
the second positioning unit (32) is a function block configured to receive the cam table or the cam calculation formula as an input parameter.

12. The controller (1) according to claim 1, wherein
the obtaining unit (21) obtains operational velocity data indicating an operational velocity of a signal output in accordance with the master axis,
the positioning unit (22) includes a first positioning unit (31), and a second positioning unit (32) configured to perform a position determination process different from a position determination process performed by the first positioning unit (31), and
when the operational velocity indicated by the operational velocity data is not greater than a predetermined value, the first positioning unit (31) determines the position of the component corresponding to the operational quantity, and
when the operational velocity indicated by the operational velocity data is greater than the predetermined value, the second positioning unit (32) determines the position of the component corresponding to the operational quantity.

**13.** A control system (10a), comprising:

a controller (1) according to any one of claims 1 to 12;
a manual pulse generator (2) including a master axis, the manual pulse generator (2) being configured to output pulses in accordance with an rotational operation of the operator;
a counter unit (3) configured to count the number of pulses output from the manual pulse generator (2), and output operational quantity data;
a slave axis configured to move the component; and
a driver (5) configured to receive the control signal from the controller (1), and control the slave axis based on the control signal,
wherein the slave axis is controlled in synchronization with the master axis.

**14.** The control system (10) according to claim 13, wherein
the controller (1) is connected to the counter unit (3) with serial communication, a universal serial bus, or wireless communication.

**15.** A control system (10b), comprising:

a manual pulse generator (2) including a master axis, the manual pulse generator (2) being configured to output pulses in accordance with an rotational operation of the operator;
a counter unit (3) configured to count the number of pulses output from the manual pulse generator (2), and output operational quantity data;
a first controller (1) configured to obtain the operational quantity data from the counter unit (3), the first controller (1) being a controller (1) according to any one of claims 1 to 12;
a second controller (1a) configured to obtain the operational quantity data from the first controller (1) and output the control signal, the second controller (1a) being a controller (1) according to any one of claims 1 to 12;
a slave axis configured to move the component; and
a driver (5) configured to receive the control signal from the second controller (1a), and control the slave axis based on the control signal.

**16.** The control system (10) according to any one of claims 13 or 14, further comprising:

an input device (6, 7) including an input unit and a display unit,
wherein the positioning unit (22) included in the controller (1) is a function block, and
the input device (6, 7) is configured to display an input screen for receiving an input parameter to be used in the function block in a graphical user interface format on the display unit.

**17.** The control system (10) according to any one of claims 13, 14 or 16, further comprising:

a display device (6) including a display unit,
wherein the display device (6) is configured to display at least one piece of information selected from a signal status of the manual pulse generator (2), an input parameter and a calculation result of the controller (1) on the display unit.

**18.** A control method for a controller (1) that is a programmable logic controller configured to rotationally control a slave axis based on a manual rotational operation of a master axis, the method comprising:

obtaining operational quantity data indicating an operational quantity of the master axis in a predetermined period;
converting the operational quantity of the master axis into a quantity in a unit used for a movement quantity of a component to be moved by the slave axis, and determining a position of the component corresponding to the operational quantity;
outputting a control signal for rotationally controlling the slave axis to move the component to the position determined in the position determination; and
receiving at least one input parameter to be used in the unit conversion and position determination and causing calculations to be performed in accordance with the at least the one parameter.

**19.** A control program enabling a computer to function as the controller (1) according to claim 1, wherein the program enables the computer to function as the obtaining unit (21), the positioning unit (22), and the output unit (23).

**20.** A computer-readable storage medium storing the control program according to claim 19.

**Patentansprüche**

**1.** Steuereinrichtung (1), bei der es sich um eine speicherprogrammierbare Steuereinrichtung zum rotatorischen Steuern einer Slave-Achse basierend auf einer manuellen Rotationsbedienung einer Master-Achse handelt, wobei die Steuereinrichtung (1) aufweist:

eine Erlangungseinheit (21), die dazu eingerichtet ist, Bedienungsquantitätsdaten zu erlangen, die eine Bedienungsquantität der Master-Achse in einem vorbestimmten Zeitraum angeben;
eine Positionierungseinheit (22), die dazu eingerichtet ist, die Bedienungsquantität der Master-Achse in eine Quantität in einer Einheit zu konvertieren, die für eine Bewegungsquantität einer von der Slave-Achse zu bewegenden Komponente benutzt wird, und eine der Bedienungsquantität entsprechende Position der Komponente zu bestimmen;
eine Ausgabeeinheit (23), die dazu eingerichtet ist, ein Steuersignal zum rotatorischen Steuern der Slave-Achse auszugeben, um die Komponente in die von der Positionierungseinheit (22) bestimmte Position zu bewegen; und
ein Programmmodul, das dazu eingerichtet ist, einen Eingabeparameter zur Verwendung bei der Einheitenkonversion und in der Positionierungseinheit (22) zu empfangen und die Steuereinrichtung (1) zu veranlassen, Berechnungen gemäß dem mindestens einen Parameter durchzuführen.

**2.** Steuereinrichtung (1) nach Anspruch 1, wobei
die Positionierungseinheit (22) eine erste Positionierungseinheit (31) umfasst und
die erste Positionierungseinheit (31) umfasst:

einen Einheitenkonverter (41), der dazu eingerichtet ist, die von den Bedienungsquantitätsdaten angegebene Bedienungsquantität in die Einheit zu konvertieren, die für die Bewegungsquantität der Komponente benutzt wird, um eine konvertierte Quantität zu bestimmen,
eine erste Berechnungseinheit (42), die dazu eingerichtet ist, eine Quantität einer Änderung der konvertierten Quantität in dem vorbestimmten Zeitraum zu bestimmen,
eine zweite Berechnungseinheit (43), die dazu eingerichtet ist, die Änderungsquantität mit einer vorbestimmten Vergrößerung zu multiplizieren, um eine vergrößerte Änderungsquantität zu berechnen, und
eine dritte Berechnungseinheit (44), die dazu eingerichtet ist, die vergrößerte Änderungsquantität zu integrieren, um eine der Bedienungsquantität entsprechende Position der Komponente zu berechnen.

**3.** Steuereinrichtung (1) nach Anspruch 2, wobei
die zweite Berechnungseinheit (43) dazu eingerichtet ist, die Vergrößerung in Übereinstimmung mit der Änderungsquantität zu ändern.

**4.** Steuereinrichtung (1) nach einem der Ansprüche 2 und 3, wobei,
wenn die vergrößerte Änderungsquantität größer als eine maximale Änderungsquantität ist, die dritte Berechnungseinheit (44) die maximale Änderungsquantität integriert, um die Position der Komponente zu berechnen, und
wenn die vergrößerte Änderungsquantität nicht größer als die maximale Änderungsquantität ist, die dritte Berechnungseinheit (44) die vergrößerte Änderungsquantität integriert, um die Position der Komponente zu berechnen.

**5.** Steuereinrichtung (1) nach Anspruch 4, ferner aufweisend:
eine Einstelleinheit (24), die dazu eingerichtet ist, die maximale Änderungsquantität anhand einer vorherigen vergrößerten Änderungsquantität einzustellen.

**6.** Steuereinrichtung (1) nach Anspruch 5, wobei
die Einstelleinheit (24) die maximale Änderungsquantität entsprechend einem Bediener einstellt, der die Master-Achse bedient.

**7.** Steuereinrichtung (1) nach einem der Ansprüche 2 bis 6, wobei
wenn die von der dritten Berechnungseinheit (44) berechnete Position außerhalb eines zulässigen Bewegungsbereichs der Komponente ist, die erste Positionierungseinheit (31) eine Bewegungsgrenzposition, bis zu welcher die Komponente bewegbar ist, als der Bedienungsquantität entsprechende Position der Komponente bestimmt.

**8.** Steuereinrichtung (1) nach Anspruch 4, wobei
die erste Positionierungseinheit (31) ein Funktionsblock ist, der dazu eingerichtet ist, mindestens die Vergrößerung oder die maximale Änderungsquantität als Eingabeparameter zu empfangen.

**9.** Steuereinrichtung (1) nach einem der Ansprüche 1 bis 8, wobei
die Positionierungseinheit (22) eine zweite Positionierungseinheit (32) umfasst und
die zweite Positionierungseinheit (32) umfasst: eine vierte Berechnungseinheit (45), die dazu eingerichtet ist, einen kumulativen Wert für die Bedienungsquantität zu berechnen; und
eine Bestimmungseinheit (46), die dazu eingerichtet ist, basierend auf Master-Slave-Beziehungsinformationen, die eine Entsprechungsbeziehung zwischen dem kumulativen Wert und der Position der Komponente angeben, eine dem kumulativen Wert entsprechende Position als der Bedienungsquantität entsprechende Position der Komponente zu bestimmen.

**10.** Steuereinrichtung (1) nach Anspruch 9, wobei
die Master-Slave-Beziehungsinformationen eine Nockentabelle oder eine Nockenberechnungsformel umfassen.

**11.** Steuereinrichtung (1) nach Anspruch 10, wobei
die zweite Positionierungseinheit (32) ein Funktionsblock ist, der dazu eingerichtet ist, die Nockentabelle oder die Nockenberechnungsformel als Eingabeparameter zu empfangen.

**12.** Steuereinrichtung (1) nach Anspruch 1, wobei
die Erlangungseinheit (21) Bedienungsgeschwindigkeitsdaten erlangt, welche eine Bedienungsgeschwindigkeit eines in Übereinstimmung mit der Master-Achse ausgegebenen Signals angibt,
die Positionierungseinheit (22) eine erste Positionierungseinheit (31) und eine zweite Positionierungseinheit (32) umfasst, welche dazu eingerichtet ist, einen Positionsbestimmungsprozess durchzuführen, der sich von einem von der ersten Positionierungseinheit (31) durchgeführten Positionsbestimmungsprozess unterscheidet, und
wenn die von den Bedienungsgeschwindigkeitsdaten angegebene Bedienungsgeschwindigkeit nicht größer als ein vorbestimmter Wert ist, die erste Positionierungseinheit (31) die der Bedienungsquantität entsprechende Position der Komponente bestimmt, und
wenn die von den Bedienungsgeschwindigkeitsdaten angegebene Bedienungsgeschwindigkeit größer als ein vorbestimmter Wert ist, die zweite Positionierungseinheit (32) die der Bedienungsquantität entsprechende Position der Komponente bestimmt.

**13.** Steuersystem (10a), das aufweist:

eine Steuereinrichtung (1) nach einem der Ansprüche 1 bis 12;
einen manuellen Impulsgenerator (2) mit einer Master-Achse, wobei der manuelle Impulsgenerator (2) dazu eingerichtet ist, gemäß einer Rotationsbedienung seitens des Bedieners Impulse auszugeben;
eine Zählereinheit (3), die dazu eingerichtet ist, die Anzahl der von dem manuellen Impulsgenerator (2) ausgegebenen Impulse zu zählen und Bedienungsquantitätsdaten auszugeben;
eine Slave-Achse, die dazu eingerichtet ist, die Komponente zu bewegen; und
eine Ansteuereinrichtung (5), die dazu eingerichtet ist, das Steuersignal von der Steuereinrichtung (1) zu empfangen und die Slave-Achse basierend auf dem Steuersignal zu steuern,
wobei die Slave-Achse in Synchronisation mit der Master-Achse gesteuert wird.

**14.** Steuersystem (10) nach Anspruch 13, wobei
die Steuereinrichtung (1) mittels serieller Datenübertragung, einem universellen seriellen Bus oder drahtloser Datenübertragung mit der Zählereinheit (3) verbunden ist.

**15.** Steuersystem (10b), das aufweist:

einen manuellen Impulsgenerator (2) mit einer Master-Achse, wobei der manuelle Impulsgenerator (2) dazu eingerichtet ist, gemäß einer Rotationsbedienung seitens des Bedieners Impulse auszugeben;
eine Zählereinheit (3), die dazu eingerichtet ist, die Anzahl der von dem manuellen Impulsgenerator (2) ausgegebenen Impulse zu zählen und Bedienungsquantitätsdaten auszugeben;
eine erste Steuereinrichtung (1), die dazu eingerichtet ist, die Bedienungsquantitätsdaten von der Zählereinheit (3) zu erlangen, wobei die erste Steuereinrichtung (1) eine Steuereinrichtung (1) nach einem der Ansprüche 1 bis 12 ist;

eine zweite Steuereinrichtung (1a), die dazu eingerichtet ist, die Bedienungsquantitätsdaten von der ersten Steuereinrichtung (1) zu erlangen und das Steuersignal auszugeben, wobei die zweite Steuereinrichtung (1a) eine Steuereinrichtung (1) nach einem der Ansprüche 1 bis 12 ist;
eine Slave-Achse, die dazu eingerichtet ist, die Komponente zu bewegen; und
eine Ansteuereinrichtung (5), die dazu eingerichtet ist, das Steuersignal von der zweiten Steuereinrichtung (1a) zu empfangen und die Slave-Achse basierend auf dem Steuersignal zu steuern.

16. Steuersystem (10) nach einem der Ansprüche 13 oder 14, ferner aufweisend:

eine Eingabevorrichtung (6, 7) mit einer Eingabeeinheit und einer Anzeigeeinheit,
wobei die in der Steuereinrichtung (1) umfasste Positionierungseinheit (22) ein Funktionsblock ist und die Eingabevorrichtung (6, 7) dazu eingerichtet ist, in einem Format einer grafischen Benutzerschnittstelle auf der Anzeigeeinheit eine Eingabemaske zum Entgegennehmen eines Eingabeparameters zur Verwendung in dem Funktionsblock anzuzeigen.

17. Steuersystem (10) nach einem der Ansprüche 13, 14 oder 16, ferner aufweisend:

eine Anzeigevorrichtung (6) mit einer Anzeigeeinheit,
wobei die Anzeigevorrichtung (6) dazu eingerichtet ist, auf der Anzeigeeinheit mindestens ein Informationselement anzuzeigen, das ausgewählt ist unter einem Signalstatus des manuellen Impulsgenerators (2), einem Eingabeparameter und einem Berechnungsergebnis der Steuereinrichtung (1).

18. Steuerverfahren für eine Steuereinrichtung (1), bei der es sich um eine speicherprogrammierbare Steuereinrichtung handelt, die zum rotatorischen Steuern einer Slave-Achse basierend auf einer manuellen Rotationsbedienung einer Master-Achse eingerichtet ist, wobei das Verfahren umfasst:

Erlangen von Bedienungsquantitätsdaten, die eine Bedienungsquantität der Master-Achse in einem vorbestimmten Zeitraum angeben;
Konvertieren der Bedienungsquantität der Master-Achse in eine Quantität in einer Einheit, die für eine Bewegungsquantität einer von der Slave-Achse zu bewegenden Komponente benutzt wird, und Bestimmen einer der Bedienungsquantität entsprechenden Position der Komponente;
Ausgeben eines Steuersignals zum rotatorischen Steuern der Slave-Achse, um die Komponente in die bei der Positionsbestimmung bestimmte Position zu bewegen; und
Empfangen mindestens eines Eingabeparameters zur Verwendung bei der Einheitenkonversion und bei der Positionsbestimmung und Veranlassen, dass Berechnungen gemäß dem mindestens einen Parameter durchgeführt werden.

19. Steuerprogramm, das einen Computer dazu in die Lage versetzt, als die Steuereinrichtung (1) nach Anspruch 1 zu funktionieren, wobei das Programm den Computer dazu in die Lage versetzt, als die Erlangungseinheit (21), die Positionierungseinheit (22) und die Ausgabeeinheit (23) zu funktionieren.

20. Maschinenlesbares Speichermedium, auf dem das Steuerprogramm nach Anspruch 19 gespeichert ist.

**Revendications**

1. Contrôleur (1) qui est un contrôleur programmable permettant de commander en rotation un axe esclave sur la base d'une opération de rotation manuelle d'un axe maître, le contrôleur (1) comprenant :

une unité d'obtention (21) configurée pour obtenir des données de quantité d'exécution indiquant une quantité d'exécution de l'axe maître pour une période prédéterminée ;
une unité de positionnement (22) configurée pour convertir la quantité d'exécution de l'axe maître en une quantité d'une unité utilisée pour une quantité de déplacement d'un composant devant être déplacé par l'axe esclave, et pour déterminer une position du composant correspondant à la quantité d'exécution ;
une unité de sortie (23) configurée pour délivrer un signal de commande destiné à la commande en rotation de l'axe esclave de déplacement du composant vers la position déterminée par l'unité de positionnement (22) ; et
un module de programme configuré pour recevoir un paramètre d'entrée à utiliser dans l'unité de conversion d'unité et de positionnement (22), et pour amener le contrôleur (1) à exécuter un calcul conformément à l'au moins un paramètre.

2. Contrôleur (1) selon la revendication 1, dans lequel
l'unité de positionnement (22) comprend une première unité de positionnement (31), et
la première unité de positionnement (31) comprend

un convertisseur (41) d'unité configuré pour convertir la quantité d'exécution indiquée par les données de quantité d'exécution en la quantité de l'unité utilisée pour la quantité de déplacement du composant de façon à déterminer une quantité de conversion,
une première unité de calcul (42) configurée pour calculer une quantité de variation de la quantité de conversion pour la période prédéterminée,
une deuxième unité de calcul (43) configurée pour multiplier la quantité de variation par une amplification prédéterminée de façon à calculer une quantité de variation d'amplification, et
une troisième unité de calcul (44) configurée pour intégrer la quantité de variation d'amplification de façon à calculer une position du composant correspondant à la quantité d'exécution.

3. Contrôleur (1) selon la revendication 2, dans lequel
la deuxième unité de calcul (43) est configurée pour faire varier l'amplification conformément à la quantité de variation.

4. Contrôleur (1) selon l'une quelconque des revendications 2 et 3, dans lequel
lorsque la quantité de variation d'amplification est supérieure à une quantité de variation maximale, la troisième unité de calcul (44) intègre la quantité de variation maximale pour calculer la position du composant, et
lorsque la quantité de variation d'amplification n'est pas supérieure à la quantité de variation maximale, la troisième unité de calcul (44) intègre la quantité de variation d'amplification pour calculer la position du composant.

5. Contrôleur (1) selon la revendication 4, comprenant en outre :
une unité de définition (24) configurée pour définir la quantité de variation maximale sur la base d'une quantité de variation d'amplification précédente.

6. Contrôleur (1) selon la revendication 5, dans lequel
l'unité de définition (24) définit la quantité de variation maximale en correspondance avec un opérateur qui met en oeuvre l'axe maître.

7. Contrôleur (1) selon l'une quelconque des revendications 2 à 6, dans lequel
lorsque la position calculée par la troisième unité de calcul (44) se trouve à l'extérieur d'une plage de déplacement admissible du composant, la première unité de positionnement (31) détermine une position limite de déplacement jusqu'à laquelle le composant peut se déplacer en tant que position du composant correspondant à la quantité d'exécution.

8. Contrôleur (1) selon la revendication 4, dans lequel
la première unité de positionnement (31) est un bloc de fonction configuré pour recevoir au moins l'amplification ou la quantité de variation maximale en tant que paramètre d'entrée.

9. Contrôleur (1) selon l'une quelconque des revendications 1 à 8, dans lequel
l'unité de positionnement (22) comprend une seconde unité de positionnement (32), et
la seconde unité de positionnement (32) comprend une quatrième unité de calcul (45) configurée pour calculer une valeur cumulée de la quantité d'exécution, et
une unité de détermination (46) configurée pour déterminer une position correspondant à la valeur cumulée en tant que position du composant correspondant à la quantité d'exécution sur la base d'informations de relation maître-esclave indiquant une correspondance entre la valeur cumulée et la position du composant.

10. Contrôleur (1) selon la revendication 9, dans lequel
les informations de relation maître-esclave comprennent une table de came ou une formule de calcul de came.

11. Contrôleur (1) selon la revendication 10, dans lequel
la seconde unité de positionnement (32) est un bloc de fonction configuré pour recevoir la table de came ou la formule de calcul de came en tant que paramètre d'entrée.

**12.** Contrôleur (1) selon la revendication 1, dans lequel

l'unité d'obtention (21) obtient des données de vitesse d'exécution indiquant une vitesse d'exécution d'un signal délivré conformément à l'axe maître,

l'unité de positionnement (22) comprend une première unité de positionnement (31) et une seconde unité de positionnement (32) configurée pour mettre en oeuvre un traitement de détermination de position différent d'un traitement de détermination de position mis en oeuvre par la première unité de positionnement (31), et

lorsque la vitesse d'exécution indiquée par les données de vitesse d'exécution n'est pas supérieure à une valeur prédéterminée, la première unité de positionnement (31) détermine la position du composant correspondant à la quantité d'exécution, et

lorsque la vitesse d'exécution indiquée par les données de vitesse d'exécution est supérieure à la valeur prédéterminée, la seconde unité de positionnement (32) détermine la position du composant correspondant à la quantité d'exécution.

**13.** Système de commande (10a), comprenant :

un contrôleur (1) selon l'une quelconque des revendications 1 à 12 ;
un générateur d'impulsions manuel (2) comprenant un axe maître, le générateur d'impulsions manuel (2) étant configuré pour délivrer des impulsions conformément à une opération de rotation de l'opérateur ;
une unité compteur (3) configurée pour compter le nombre d'impulsions délivrées par le générateur d'impulsions manuel (2), et pour délivrer des données de quantité d'exécution ;
un axe esclave configuré pour déplacer le composant ; et
un pilote (5) configuré pour recevoir le signal de commande du contrôleur (1) et pour commander l'axe esclave sur la base du signal de commande,
dans lequel l'axe esclave est commandé de manière synchrone avec l'axe maître.

**14.** Système de commande (10) selon la revendication 13, dans lequel

le contrôleur (1) est connecté à l'unité compteur (3) au moyen d'une communication sérielle, d'un bus série universel ou d'une communication par voie sans fil.

**15.** Système de commande (10b), comprenant :

un générateur d'impulsions manuel (2) comprenant un axe maître, le générateur d'impulsions manuel (2) étant configuré pour délivrer des impulsions conformément à une opération de rotation de l'opérateur ;
une unité compteur (3) configurée pour compter le nombre d'impulsions délivrées par le générateur d'impulsions manuel (2) et pour délivrer des données de quantité d'exécution ;
un premier contrôleur (1) configuré pour obtenir les données de quantité d'exécution de l'unité compteur (3), le premier contrôleur (1) étant un contrôleur (1) selon l'une quelconque des revendications 1 à 12 ;
un second contrôleur (1a) configuré pour obtenir les données de quantité d'exécution du premier contrôleur (1) et pour délivrer le signal de commande, le second contrôleur (1a) étant un contrôleur (1) selon l'une quelconque des revendications 1 à 12 ;
un axe esclave configuré pour déplacer le composant ; et
un pilote (5) configuré pour recevoir le signal de commande du second contrôleur (1a) et pour commander l'axe esclave sur la base du signal de commande.

**16.** Système de commande (10) selon l'une quelconque des revendications 13 ou 14, comprenant en outre :

un dispositif d'entrée (6, 7) comprenant une unité d'entrée et une unité d'affichage,
dans lequel l'unité de positionnement (22) comprise dans le contrôleur (1) est un bloc de fonction, et
le dispositif d'entrée (6, 7) est configuré pour afficher un écran d'entrée permettant de recevoir un paramètre d'entrée à utiliser dans le bloc de fonction dans un format d'interface utilisateur graphique de l'unité d'affichage.

**17.** Système de commande (10) selon l'une quelconque des revendications 13, 14 ou 16, comprenant en outre :

un dispositif d'affichage (6) comprenant une unité d'affichage,
dans lequel le dispositif d'affichage (6) est configuré pour afficher au moins un élément d'information sélectionné à partir d'un état de signal du générateur d'impulsions manuel (2), un paramètre d'entrée et un résultat de calcul du contrôleur (1) sur l'unité d'affichage.

**18.** Procédé de commande d'un contrôleur (1) qui est un contrôleur programmable configuré pour commander en rotation un axe esclave sur la base d'une opération de rotation manuelle d'un axe maître, le procédé consistant à :

obtenir des données de quantité d'exécution indiquant une quantité d'exécution de l'axe maître pour une période prédéterminée ;

convertir la quantité d'exécution de l'axe maître en une quantité d'une unité utilisée pour une quantité de déplacement d'un composant devant être déplacé par l'axe esclave, et pour déterminer une position du composant correspondant à la quantité d'exécution ;

délivrer un signal de commande de commande en rotation de l'axe maître pour déplacer le composant jusqu'à la position déterminée lors de la détermination de position ; et

recevoir au moins un paramètre d'entrée à utiliser pour la conversion d'unité et la détermination de position et provoquer l'exécution de calculs conformément à l'au moins un paramètre.

**19.** Programme de commande permettant à un ordinateur de servir de contrôleur (1) selon la revendication 1, dans lequel le programme permet à l'ordinateur de servir d'unité d'obtention (21), d'unité de positionnement (22) et d'unité de sortie (23).

**20.** Support d'enregistrement lisible par ordinateur contenant en mémoire le programme de commande selon la revendication 19.

# FIG. 1

# FIG. 2

Manual pulse generator

# FIG. 3

```
        ( Start )
            |
            |        ┌S1
 ┌──────────────────────────┐
 │     Output pulse signal    │
 └──────────────────────────┘
            |
            |        ┌S2
 ┌──────────────────────────┐
 │        Count pulses        │
 └──────────────────────────┘
            |
            |        ┌S3
 ┌──────────────────────────┐
 │ Obtain operational quantity data │
 └──────────────────────────┘
            |
            |        ┌S4
 ┌┐─────────────────────────┌┐
 ││  Position determination  ││
 └┘─────────────────────────└┘
            |
            |        ┌S5
 ┌──────────────────────────┐
 │      Unit conversion       │
 └──────────────────────────┘
            |
            |        ┌S6
 ┌──────────────────────────┐
 │     Output control signal  │
 └──────────────────────────┘
            |
            |        ┌S7
 ┌──────────────────────────┐
 │        Control motor       │
 └──────────────────────────┘
            |
        ( End )
```

FIG. 4

```
        ┌─────────────────────────────┐
        │  First position determination │
        └─────────────────────────────┘
                      │
                      │            ⌐S11
        ┌─────────────────────────────┐
        │       Unit conversion        │
        └─────────────────────────────┘
                      │
                      │            ⌐S12
        ┌─────────────────────────────┐
        │   Calculate change quantity  │
        └─────────────────────────────┘
                      │
                      │            ⌐S13
        ┌─────────────────────────────┐
        │    Determine magnification    │
        └─────────────────────────────┘
                      │
                      │            ⌐S14
        ┌─────────────────────────────┐
        │    Multiply by magnification  │
        └─────────────────────────────┘
                      │
                      │            ⌐S15
        ┌─────────────────────────────┐
        │ Determine command change quantity │
        └─────────────────────────────┘
                      │
                      │            ⌐S16
        ┌─────────────────────────────┐
        │ Integrate command change quantity │
        └─────────────────────────────┘
                      │
                      │            ⌐S17
        ┌─────────────────────────────┐
        │   Calculate command position  │
        └─────────────────────────────┘
                      │
              ┌───────────────┐
              │      End       │
              └───────────────┘
```

## FIG. 5

| Change quantity | Magnification |
|---|---|
| 0 to 1st threshold | 1st magnification |
| 1st to 2nd threshold | 2nd magnification |
| 2nd to 3rd threshold | 3rd magnification |
| 3rd to 4th threshold | 4th magnification |
| 4th threshold... | 5th magnification |

## FIG. 6

## FIG. 7

Magnification change quantity

Maximum change quantity

Time

## FIG. 8

Second position
determination

S21

Calculate cumulative value

S22

Determine command position

End

FIG. 9

FIG. 10

# FIG. 11

Home position

D

8

4

$$D = \alpha \times \frac{\text{Distance per rotation}}{\text{Pulse number per rotation}} \times Pm$$

2

Pm

FIG. 12

Home position

D

8

D = gear ratio × Pm

2

Pm

FIG. 13

1

Controller

7

Terminal
device

FIG. 14

EP 3 091 409 B1

FIG. 15

```
MPGFILTER_instance(
        Master:=MC_Axis000,
        Slave:=MC_Axis001,
        Enable:=MPGFilterEn,
        sMPGSetRatios:=SetRatios,
        MaxVel:=MaxVelocity,
        MPGOprRatio:=SelectRatio,
        Enabled=>MPGFilterEn,
        CalcRslt=>CalcPosition,
        Busy=>MPGFilterBsy,
        Error=>MPGFilterErr,
        ErrorID=>MPGFilterErrID,
        ErrorIDEx=>MPGFilterErrIDEx);
```

FIG. 16

Manual pulse generator

Manual pulse generator    Manual pulse generator

Manual pulse generator

FIG. 17

Touch panel ~6a

~10b

Controller ~1

Controller ~1a

Counter unit ~3

Driver ~5

Manual pulse generator ~2

Motor ~4

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000222022 A
- JP 2002351514 A

- EP 1432852 A2